# EUROPÄISCHE PATENTSCHRIFT

(11) **EP 1 792 218 B1**
(45) Veröffentlichungstag und Bekanntmachung des Hinweises auf die Patenterteilung: **02.05.2012**
(21) Anmeldenummer: 05783866.6
(22) Anmeldetag: 29.08.2005
(51) Int. Cl.: G02B 6/38

(54) **MULTIFUNKTIONSSTECKDOSE FÜR FLEXIBLE FASERMONTAGE**
MULTIFUNCTIONAL SOCKET FOR FIXING A FLEXIBLE FIBER
PRISE FEMELLE MULTIFONCTION POUR MONTAGE D'UNE FIBRE FLEXIBLE

(30) Priorität: 21.09.2004 DE 102004045715
(43) Veröffentlichungstag der Anmeldung: 06.06.2007
(73) Patentinhaber: Fraunhofer-Gesellschaft zur Förderung der angewandten Forschung e.V., 80686 München (DE)
(72) Erfinder: TSCHEKALINSKIJ, Wladimir, 90429 Nürnberg (DE); WEBER, Norbert, 90562 Kalchreuth (DE)
(74) Vertreter: Stöckeler, Ferdinand
(86) Internationale Anmeldenummer: PCT/EP2005/009300
(87) Internationale Veröffentlichungsnummer: WO 2006/032345

(56) Entgegenhaltungen:
- EP-A- 0 753 773
- EP-A- 0 753 906
- EP-A- 0 928 048
- EP-A- 1 170 610
- DE-A1- 3 227 770

## Beschreibung

Die vorliegende Erfindung bezieht sich auf eine Multifunktionssteckdose, der neben einem elektrischen Anschluss eines Geräts an die Netzspannung zugleich eine Kommunikation eines Geräts mit beispielsweise einem optischen Datenbus' in einem Gebäude ermöglichen.

In vielen Gebäuden ist neben einer Netzspannungsversorgung noch zusätzlich ein Leitungsnetz für die Datenkommunikation zwischen Geräten wie beispielsweise PCs verlegt. Dies erfordert auch ein Vielzahl von zusätzlichen Steckdosen in einem Gebäude zu installieren, da jedes Gerät eine Steckdose für die Netzspannungsversorgung und eine Steckdose für die Datenkommunikation benötigt. Immer häufiger bemühen sich Unternehmen, diese Datenkommunikationsnetze durch Alternativen wie z. B. drahtlose Datenkommunikationsnetze zu ersetzen. Diese sind aber sehr aufwendig und störanfällig, was einer sicheren Übertragung von Daten innerhalb eines Gebäudes im Weg steht.

Eine Alternative stellen daher kombinierte optischelektrische Multifunktionssteckdosen dar, bei denen in einer Steckdose eine Stromversorgung und gleichzeitig ein Anschluß an ein Datenkommunikationsnetz ermöglicht wird. Einige Ausführungen dieser Multifunktionssteckdosen sind bereits vorgeschlagen worden, jedoch weisen sie erhebliche Nachteile auf, wie im folgenden dargelegt wird.

Optische Steckdosen bzw. Multifunktionssteckdosen bzw. Multimediasteckdosen sind seit einiger Zeit bekannt und werden immer dann verwendet, wenn zusätzlich zur Stromversorgung noch Daten, z. B. Steuerdaten, übertragen werden sollen. Eine optische Übertragung dieser Daten bietet viele Vorteile, vor allem bezüglich der Störfestigkeit der Datensignale. Die DE 196440223 A1 zeigt den Einsatz einer Multimediasteckdose. Hierbei werden ein PC, ein Telefon und eine Steuereinrichtung für Haushaltsgeräte jeweils an eine sog. Multimediasteckdose angeschlossen. Diese Multimediasteckdose übernimmt die Netzspannungsversorgung der Geräte und ermöglicht zugleich über eine in der Steckdose verlaufende Übermittlungsleitung die Kommunikation mit einer Raum-Steuereinheit.

Die DE29913501U1 zeigt eine multifunktionale Steckdose, bei der eine Mittelschraube der Steckdose mit einer Bohrung versehen ist. Durch diese Bohrung kann ein optisches Signal ein- bzw. ausgekoppelt werden, wenn der Hohlraum der Bohrung zu einem Kommunikationsleiter führt. Dieser Kommunikationsleiter kann insbesondere ein Lichtwellenleiter sein, der am Ende der Schraube oder unabhängig von der Schraube befestigt ist. Zwar zeigt die DE29913501U1, daß eine Bohrung in der Mittelschraube zum Einführen eines Kommunikationsleiters geeignet ist, und dass die Bohrung vorzugsweise innen verspiegelt ist, um offenbar als Hohlleiter zu dienen, jedoch bleibt unklar, wie ein ggf. zu montierender optischer Leiter bzw. Faser in diesem Loch befestigt werden soll. Darüber hinaus bleibt unklar, wie er justiert werden soll und ob dies mittels oder ohne Koppeloptik geschehen soll. Auch ist es schwierig beim Einsatz einer dicken optischen Faser, z. B. einer Polymerfaser mit einem Querschnitt von mehr als 1 mm mehr als eine optische Verbindung durch ein solches Loch in der Schraube zu bewerkstelligen. Das Loch in der Schraube kann nicht mehr groß genug gewählt werden, um eine geeignete optische Ankopplung für eine bidirektionale Kommunikation über ein optisches Faserpaar zu ermöglichen.

Die DE19542167 beschreibt, dass in der Steckdose ein Busankoppler vorhanden sein soll. Hier wird zur optischen Ankopplung vorgeschlagen, ein System aus zwei Linsen zu verwenden, um die optischen Verluste bei einem Lichtübergang zwischen Steckdose und Stecker möglichst gering zu halten. Die Steckdose wird wie oben elektrisch mit dem Hausnetz verbunden. Eine Optikeinheit ist mit Wellenleitern fest in der Steckdose vormontiert, so dass die optische Übertragungsstrecke sehr kurz ist und nur zu optoelektronischen Wandlern in der Steckdose führt. Diese optoelektronischen Wandler fungieren als Sender oder als Empfänger. Die Steckdose selbst wird dabei mit elektrischen Anschlüssen an die Hausinstallation angeschlossen, ein optischer Anschluss der Steckdose an die Hausinstallation ist jedoch nicht möglich. Da in jeder Steckdose ein optoelektronischer Wandler und die entsprechende Steuerung dazu vorgesehen werden muss, ist dies mit erheblichen Kosten verbunden. Darüber hinaus nehmen die optoelektronischen Wandler zusätzlichen Raum in der Steckdose ein und erschweren die Montage einer Steckdose bei der Gebäudeinstallation.

Die DE19525214A1 beschreibt, wie optische Fasern in einem Stecker angeordnet sein können, wobei die korrespondierende Steckdose mit einem kurzen Wellenleiterstück ausgeführt ist, und sich optoelektronische Wandler in der Dose befinden, so dass die Dose elektrisch kontaktiert werden kann. Die optischen Wellenleiter werden dabei mit optoelektronischen Wandlern auf eine federnde Rückplatte montiert, so dass ein guter Kontakt zum Stecker hergestellt wird, was gleichzeitig einen longitudinalen Versatz unterbindet. Sie ist jedoch daher nicht geeignet, freiliegende flexible optische Fasern an die Steckdose anzuschließen, sondern funktioniert nur, wenn der optoelektronische Wandler in der Dose integriert ist. Zugleich beschreibt die DE19525214A1, dass ein elektrischer Busankoppler mit dem optoelektronischen Wandler verbunden ist. Die Daten werden daher über eine elektrische Leitung dem Busankoppler zur Verfügung gestellt. Auch hier ist die optoelektronische Wandlung der Daten in der Steckdose mit hohen Kosten verbunden.

Die DE19834723A1 zeigt, dass ein System aus Steckern und optischen Endgeräteanschlüssen, die eine optische Koppeleinheit beinhalten, in einem Haushalt Endgeräte mit optischen Endgeräteanschlüssen mit einem Nachrichtennetz verbinden können. Die DE19834723A1 zeigt zugleich einen Stecker, der zwei senkrecht von seinem Steckergehäuse abstehende gleiche und parallel sich erstreckende Kontaktstifte aufweist. Die Kontaktstifte umfassen dabei jeweils eine elektrisch leitende Kontakthülse bzw. Buchse in dem Innenraum, in dem ein Kanal zur Aufnahme des Endes des optischen Leiters vorgesehen ist. Am Ende jedes Kontaktstifts befindet sich dann eine optische Koppeleinheit, die das Licht von dem Stecker in die Steckdose bzw. von der Steckdose in den Stecker einkoppelt. Da die in den elektrisch leitenden Kontakthülsen befindlichen optischen Leiter von den elektrisch leitenden Kontakthülsen zu isolieren sind, ist die Herstellung eines derartigen Steckers sehr aufwändig und teuer.

DE3227770 offenbart eine Multifunktionssteckdose mit einem Steckdosensockel, einer Steckdosenabdeckung mit elektrischen Kontaktlöchern und einem Faserloch, einer Führungsvorrichtung welche ein Faserende aufnimmt und führt, und einer Klemmvorrichtung am Sockel.

Der vorliegenden Erfindung liegt die Aufgabe zugrunde, eine Multifunktionssteckdose zu schaffen, die kostengünstig zu fertigen, einfach zu montieren und flexibel einsetzbar ist.

Diese Aufgabe wird durch eine Multifunktionssteckdose gemäß Anspruch 1 gelöst.

Die vorliegende Erfindung schafft eine Multifunktionssteckdose gemäß Anspruch 1.

Der vorliegenden Erfindung liegt die Erkenntnis zugrunde, dass eine flexible optische Faser, die Daten auf der optischen Ebene in einem Gebäude über längere Strecken überträgt, mittels einer Führungsvorrichtung, in die die optische Faser an einem Ende eingeschoben werden kann, und mittels einer Klemmvorrichtung zum Festklemmen der Faser, an einem Faserende gegenüber einem Faserloch in einer Steckdosenabdeckung so positioniert werden kann, so dass eine optische Verbindung mit einem Faserende oder einem optischen Sender bzw. Empfänger in einem in der Steckdose steckenden Stecker ermöglicht ist.

Eine Multifunktionssteckdose gemäß einem Ausführungsbeispiel der vorliegenden Erfindung ermöglicht ein Anbringen eines Faserendes einer optischen Faser in der Nähe eines Faserlochs in der Steckdosenabdeckung so, dass kein optoelektronischer Wandler in der Steckdose erforderlich ist. Hierdurch werden die Kosten für die Herstellung der Multifunktionssteckdose gesenkt. Gleichzeitig ist eine Montage der Multifunktionssteckdose gemäß einem Ausführungsbeispiel der vorliegenden Erfindung einfacher, da das Faserende direkt in der Führung in der Nähe des Faserlochs an der Steckdosenabdeckung angebracht werden kann, ohne dass noch zusätzliche optoelektronische Wandler in der Steckdose zu montieren sind. Es sind auch keine elektrischen Busanschlüsse und Spannungsversorgungen für die optoelektronischen Wandler in der Multifunktionssteckdose gemäß der vorliegenden Erfindung vorzusehen.

Darüber hinaus ermöglicht die Multifunktionssteckdose gemäß einem Ausführungsbeispiel der vorliegenden Erfindung die räumliche Trennung der Netzversorgungsspannungskontakte und der optischen Faser. Gleichzeitig ermöglicht die Multifunktionssteckdose gemäß einem Ausführungsbeispiel der vorliegenden Erfindung eine größere Flexibilität bei der Montage der Steckdose, da die optische Faser und die elektrischen Kontakthülsen in getrennten Montageschritten an dem Steckdosensockel befestigt werden können. Ein weiterer Vorteil ist, dass damit beim Ausfall einer Komponente, entweder der optischen Faser oder der elektrischen Kontakthülsen, nicht die gesamte Vorrichtung ausgetauscht werden muss, sondern nur die jeweils defekte Komponente.

Schließlich ermöglicht die erfindungsgemäße Multifunktionssteckdose in einfacher Weise Schnittstellen in Gebäuden, in denen neben den Kabeln für ein Spannungsversorgungsnetz Lichtleitfasern für eine Datenkommunikation, z.B. von Multimediadaten oder Steuerdaten, verlegt sind. Dabei können Faserenden dieser Lichtleitfasern problemlos auf einfache Weise mit der erfindungsgemäßen Multifunktionssteckdose gekoppelt werden, um eine Schnittstelle des Lichtleitfasernetzes zu einer (über einen entsprechenden Stecker) angeschlossenen Vorrichtung zu schaffen.

Es ist möglich einen Multifunktionsstecker zu realisieren, um Vorrichtungen und Geräte mit der erfindungsgemäßen Multifunktionssteckdose zu koppeln, so dass über die Multifunktionssteckdose und den Multifunktionsstecker zum einen die Stromversorgung erfolgen kann und zum anderen beliebige, über eine Lichtleitfaser übertragbare Daten, z.B. Multimediadaten oder Steuerdaten, zu übertragen. Die vorliegende Erfindung ermöglicht somit ein Datennetz in Gebäuden, sowohl gewerblich als insbesondere auch privat, dass vergleichbar zu einem herkömmlichen Stromversorgungsnetz aufgebaut ist. Dabei können die erfindungsgemäßen Multifunktionssteckdosen jeweils auf einfache Weise mit Faserenden, sowohl nicht aufgeweiteten als auch aufgeweiteten, sogenannten Tapern, verbunden werden.

Bevorzugte Ausführungsbeispiele der vorliegenden Erfindung werden nachfolgend bezugnehmend auf die beiliegenden Zeichnungen näher erläutert.

Es zeigen:
- Fig. 1: eine Multifunktionssteckdose gemäß einem Ausführungsbeispiel der vorliegenden Erfindung;
- Fig. 2: eine Führungsvorrichtung in einer Steckdosenabdeckung einer Multifunktionssteckdose gemäß einem Ausführungsbeispiel der vorliegenden Erfindung;
- Fig. 3: eine Führungsvorrichtung mit einer konisch geformten Abstandshülse einer Multifunktionssteckdose gemäß einem Ausführungsbeispiel der vorliegenden Erfindung;

- Fig. 4: eine Steckdosenabdeckung mit einer Führungs- und Klemmvorrichtung gemäß einem Ausführungsbeispiel der vorliegenden Erfindung;
- Fig. 5: eine Vorderansicht einer Multifunktionssteckdose gemäß einem Ausführungsbeispiel der vorliegenden Erfindung; und
- Fig. 6: eine Multifunktionssteckdose gemäß der vorliegenden Erfindung, in die ein Stecker mit einem Fasentaper eingesteckt ist.

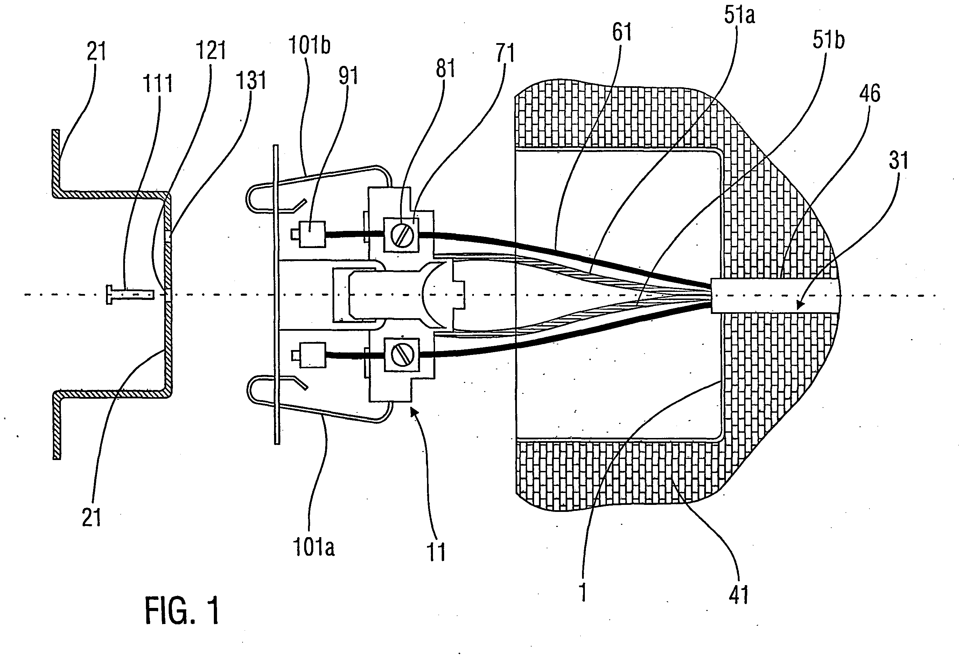

Fig. 1 zeigt ein Ausführungsbeispiel einer Multifunktionssteckdose gemäß der vorliegenden Erfindung. Die Multifunktionssteckdose besteht aus einer Unterputzdose 1, einem Steckdosensockel 11 und einer Steckdosenabdeckung 21. Die Unterputzdose 1 ist in einer Mauer 41, eingebracht.

Durch eine Ausnehmung in einer Wand der Unterputzdose 1 ragt ein Kabel 31 in die Unterputzdose 1 hinein. Es ist von einem Kabelmantel 46 umgeben und führt Netzspannungsleitungen 51a, 51b und eine optische Faser 61. Die Leitungen 51a, 51b sind an dem Steckdosensockel 11 befestigt.

Eine Klemmvorrichtung 71 ist an dem Steckdosensockel 11 befestigt, wobei die optische Faser 61 durch die Klemmvorrichtung 71 hindurchgezogen wird, und anschließend mit einer Schraube 81 festgeklemmt wird. Eine Abstandshülse 91 ist auf das Ende der optischen Faser 61 aufgesteckt.

Zwei Schnappfedern 101a, 101b dienen dazu den Steckdosensockel 11 an der Steckdosenabdeckung 21 zu befestigen. Darüber hinaus wird die Steckdosenabdeckung 21 mit einer Steckdosenabdeckungsschraube 111, die durch eine Bohrung 121 hindurchgeschoben wird, an dem Steckdosensockel 11 befestigt. Die optische Faser ist mit der Abstandshülse 91 an einem Faserloch 131 in der Steckdosenabdeckung 21 zu fixieren, wobei ein Teil der Abstandshülse 91 in das Faserloch 131 hinein zu schieben ist.

Im obigen Ausführungsbeispiel wird dann mittels der Abstandshülse 91 die Faser 61 direkt an dem Faserloch 131 fixiert, so dass sie hier mit einem nicht gezeigten Stecker der in die Steckdosenabdeckung 21 eingeführt wird, über das Faserloch 131 eine Verbindung mit einem ebenfalls hier nicht gezeigten optischen Faserstück in dem Stecker durchführen kann. In der Multifunktionssteckdose gemäß dem Ausführungsbeispiel der vorliegenden Erfindung ist somit kein optoelektronischer Wandler erforderlich, wodurch die Kosten der Multifunktionssteckdose gesenkt werden, und die Montage erheblich vereinfacht ist.

In zukünftigen Hausnetzen können Kommunikations- und Multimediadienste somit über ein optisches Netzwerk im Haus verteilt werden. Dieses Netzwerk besteht aus optischen Fasern, die in geeigneter Weise miteinander verbunden sind, in der Regel wird es sich um ein optisches Sternnetz handeln. Die Kopfstation des Sterns dient als zentrale Vermittlung, die flexibel gestaltet werden kann, zum Einspeisen von Signalen etc. Um Endgeräte an dieses Netz anzuschließen, muss es also eine Verbindungsstelle zwischen dem Hausnetz und dem Endgerät geben. Dies könnte ähnlich dem Netz zur Stromversorgung ausgeführt sein und sogar parallel mit diesem verlegt werden. Zugleich wird ermöglicht, dass nun bei einer Hausinstallation solche Steckdosen an einer Stromversorgung und gleichzeitig an das optische Kommunikationsnetz im Haus in einfacher Weise angeschlossen werden können. Entgegen dem Stand der Technik geht diese Lösung damit nicht mehr davon aus, dass ein elektrisches Datennetz im Haus vorhanden ist, an das die Steckdose mit elektrischen Verbindungen angeschlossen wird. Außerdem zeigt diese Lösung in obigem Ausführungsbeispiel, wie die Verbindung in einem optischen Hausnetz zu gestalten ist.

Gemäß dem Ausführungsbeispiel der vorliegenden Erfindung ist es nun möglich, optische Fasern eines Kommunikationsnetzes, die aus einer Unterputzdose herausgeführt sind, zusammen mit den Kabeln für die Stromversorgung in einfacher Weise an eine neuartige Multifunktionssteckdose anzuschließen, ohne dass aufwändige Justagearbeiten durchgeführt werden müssen.

Die Unterputzdose 1 ist hierbei meist eine aus Kunststoff ausgeführte Dose, die in die Wand eingelassen ist, während die eigentliche Steckdose bzw. der Steckdosensockel eine Vorrichtung ist, an die die Kabel angeklemmt werden und die dann mittels Krallen bzw. Schnappfedern 101a, 101b in der Unterputzdose 1 und an der Steckdosenabdeckung 21 befestigt werden.

Die Steckdosenabdeckung 21 wird auch als Stecknäpfchen bezeichnet. Sie ist dabei eine frontseitige Abdeckung, die zur elektrischen Isolierung und zur Aufnahme des Steckers dient, und ist vorzugsweise als spezielles Kunststoff-Formteil ausgeführt. In der Abdeckung befinden sich seitliche Führungen für den Stecker bzw. Steckdosensockel 11 und zwei Kontaktlöcher, die hier nicht gezeigt sind, und durch die der Stecker in die darunter liegende Steckdose geführt werden kann. Darüber hinaus verfügt die Steckdosenabdeckung 21 über zwei hier nicht gezeigte Schlitze für die Kontaktfedern des Schutzleiters und ein Mittenloch bzw. die Bohrung 121 zur Durchführung der Befestigungsschraube bzw. Steckdosenabdeckungsschraube 111.

In dem obigen Ausführungsbeispiel wird eine rein passive Multifunktionssteckdose gezeigt, die ohne Elektronik bzw. elektronische Steuerungen funktioniert, und es ermöglicht, neben den elektrischen Leitungen 51a, 51b die aus einer Unterputzdose herausragende optische Faser 61 ohne aufwändige Justagearbeiten an diese Steckdose anschließen zu können. Die Multifunktionssteckdose gemäß dem Ausführungsbeispiel der vorliegenden Erfindung ist Zugleich durch folgende Merkmale gekennzeichnet. Bevorzugt kann die optische Faser 61 als flexibel optische Faser mit einem großen Querschnitt wie beispielsweise größer als 0,1 mm ausgeführt sein, wie ihn eben beispielsweise optische Polymerfasern aufweisen. Die optischen Fasern werden nach Entfernen eines in seiner Länge gut definierten Stückes des Schutzmantels, was einem Abisolieren bei elektrischen Kabeln entspricht, und nach eventuellen kurzem Polieren, was aber nicht zwingend notwendig ist, in der Steckdose mit einer Klemmvorrichtung 81 festgeklemmt, oder durch eine Führung zu einer groben Halterung geführt. Diese Führung könnte eventuell auch weggelassen werden.

Anschließend wird das Steckdosennäpfchen 21 aufgesetzt, das eine Führung bzw. Abstandshülse 91 für die optische Faser 61 enthält, welche dafür sorgt, dass eine gut definierte Position der Fasern 61 in der Abdeckung 21 erreicht wird. Wenn die Faser nicht durch die Klemmvorrichtung 71 an der Steckdose bzw. an dem Steckdosensockel 11 befestigt wurde, kann sich die Klemmvorrichtung 71 für die Faser 61 auch an der Führung 91 bzw. sogar an der Steckdosenabdeckung 21 befinden. In diesem Fall kann statt der Klemmvorrichtung 71 an der Steckdose nur eine lose Führung für die Faser vorhanden sein oder beides auch ganz fehlen.

Die Führung der optischen Faser 61 in der Steckdosenabdeckung 21 kann direkt mit der Abdeckung verbunden sein, sie kann aber auch aus mehreren Teilen ausgeführt sein, z. B. mit externer, loser Plastikhülse. Diese Führung hat außerdem die Aufgabe einer Abstandshülse, da sie das abisolierte Faserstück aufnimmt, und ist genauso lang wie dieses, so dass das Faserende nach der Montage in einer Ebene mit dem Boden des Steckdosennäpfchens 21 zu liegen kommt. Zur besseren Einführung der Faser 61 in die Abstandshülse 91 kann die Hülse innen konisch geformt sein.

Wenn zum Erreichen von sehr geringen optischen Verlusten dennoch eine einfache Justage der Faser 61 erfolgen soll, kann es alternativ zur eben beschriebenen Montage so geschehen, dass das abisolierte Faserstück etwas länger gelassen wird als die Abstandshülse. Dann werden die Fasern 61 durch die Klemmvorrichtung 71 und die Abstandshülse 91 geschoben, bis das Faserende bündig mit dem Boden der Steckdosenabdeckung 21 abschließt. Als Montagehilfe kann hier sogar ein Dummy-Stecker oder ein anders, geeignetes Formteil als Anschlag für die Fasern verwendet werden. Wenn die gewünschte Position erreicht wird, wird die Faser in der Klemmvorrichtung 71 festgeklemmt, z.B. durch die Schraube 81 oder sogar durch eine anders geartete klemme. Mit diesem Vorgang können mehrere Fasern in einem Arbeitsgang justiert und festgeklemmt werden.

Bei Verwendung eines hybriden optisch-elektrischen Steckers als Gegenstück zur Steckdose sollte ein optischer Fasertaper vorzugsweise in den Stecker mit eingebaut werden, um die Koppelverluste bzw. optischen Koppelverluste gering zu halten, und damit die optische Kopplung zu verbessern. Durch den Fasertaper wird das Faserende vergrößert. Bei Polymerfasern kann dies z. B. eine Vergrößerung von 1 mm auf 1,5 mm bedeuten, wodurch die optische Verbindung deutlich unempfindlicher gegenüber Justagetoleranzen wird.

Alternativ kann das das Faserende der aus der Wand kommenden Faser mit einem Fasertaper versehen sein, wobei bei Verwendung von optischen Polymerfasern ein solcher Taper beispielsweise einfach durch Erwärmen des Faserendes erzeugt werden kann, wodurch sich das Faserende aufweitet. Der Taper kann aber auch schon vorher vorhanden sein oder auf eine andere Art und Weise erzeugt werden. Die Führungsvorrichtung erfindungsgemäße Multifunktionssteckdose ist dann derart ausgebildet, dass das aufgeweitete Faserende in dieselbe einschiebbar ist, um dasselbe zu positionieren. Die Klemmvorrichtung kann dann ausgebildet sein, um die Faser entweder im aufgeweiteten Bereich oder im nicht aufgeweiteten Bereich zu klemmen.

Im obigen Ausführungsbeispiel ist eine Multifunktionssteckdose gezeigt, mit der es möglich ist, flexible optische Fasern aus einem optische Hausnetz zusammen mit elektrischen Stromkabeln direkt anzuklemmen. Dafür muss kein optischer Wellenleiter in der Steckdose als Zwischenstück verwendet werden, wodurch die optischen Verluste kleiner werden und die Anordnung damit billiger. Zusätzlich ist dafür auch keine Koppeloptik erforderlich. Alle Teile der Steckdose sind in dem obigen Ausführungsbeispiel so ausgeführt, dass nicht zwingend eine Justage der Faser in der Steckdose erforderlich ist. Durch die spezielle Ausführung der Abdeckung ist eine laterale und longitudinale Führung der Faser in der Steckdose sichergestellt. Eine Justage der Faser ist aber dennoch möglich, wenn die optischen Verluste sehr klein gehalten werden sollen. Außerdem kann die Multifunktionssteckdose gemäß dem Ausführungsbeispiel der obigen Erfindung sehr kostengünstig hergestellt werden, und die Montagearbeiten können auf ein Minimum reduziert werden.

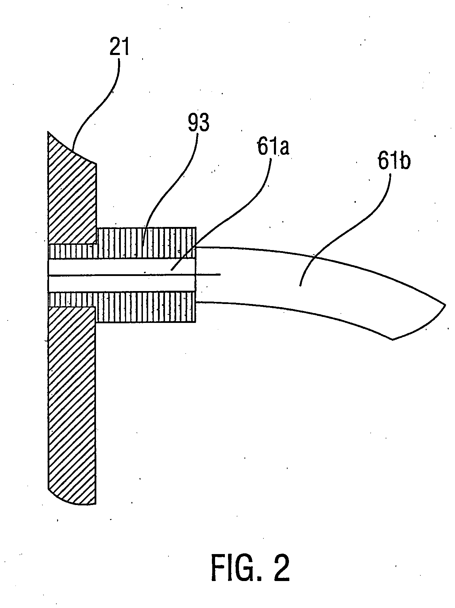

Fig. 2 zeigt eine Fixierung der optischen Faser 61 an der Steckdosenabdeckung 21. Aufgeführt sind hier die Steckdosenabdeckung 21, ein Einschubelement 93, und ein optischer Faserabschnitt mit entferntem Schutzmantel 61a und ein optischer Faserabschnitt mit Schutzmantel 61b. Der Schutzmantel 46 der optischen Faser 61 ist dabei so entfernt worden, dass er bündig an das Einschubelement 93 anstößt. Der optische Faserabschnitt 61a mit entferntem Schutzmantel ist in das Einschubelement 93 eingeführt, und an dieser so fixiert, dass das Ende der optischen Faser 61 bündig mit einer Oberfläche der Steckdosenabdeckung 21 ausgeführt ist. Diese bündige Ausführung einer Faserendoberfläche und der Oberfläche der Steckdosenabdeckung 21 ermöglicht es, die optischen Koppelverluste zu reduzieren. Ein Lichtstrahl breitet sich dabei von der optischen Faser 61 über die Faserendoberfläche und einen Luftspalt, der vorzugsweise möglichst schmal ist, über eine Faserendoberfläche einer optischen Faser in einem hier nicht gezeigten Stecker, der in die Multifunktionssteckdose eingesteckt ist, und dann über die optische Faser, die ja in dem Stecker endet, zu einem hier nicht gezeigten Endgerät aus.

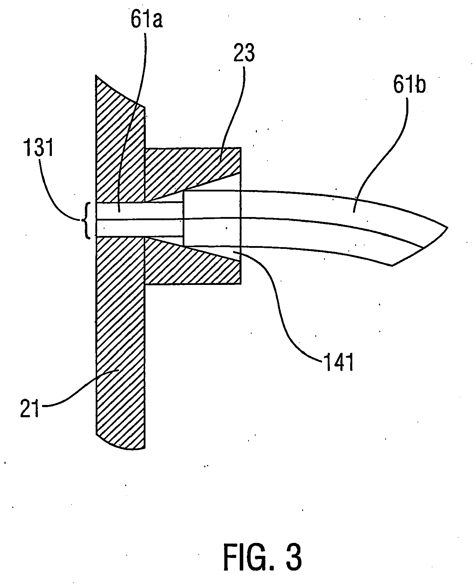

Fig. 3 zeigt ein weiteres Ausführungsbeispiel einer Führungsvorrichtung einer Multifunktionssteckdose gemäß der vorliegenden Erfindung. Dargestellt sind die Steckdosenabdeckung 21, eine Steckdosenabdeckung-Erhebung 23, der optische Faserabschnitt mit entferntem Schutzmantel 61a, der optische Faserabschnitt mit Schutzmantel 61b und eine Steckdosenabdeckung-Ausnehmung 141. Die Steckdosenabdeckung 21 weist hier zusätzlich zu der Gehäusewand noch die Steckdosenabdeckung-Erhebung 23 von der Gehäusewand auf, in die eine konisch geformte Steckdosenabdeckung-Ausnehmung 141 eingebracht ist.

Der Schutzmantel 46 der optischen Faser 61 stößt dabei an die Innenwand der konischen Stechdosenabdeckung-Ausnehmung 141 und wird dabei lateral fixiert. Der optische Faserabschnitt mit entferntem Schutzmantel 61a wird durch das Faserloch 131 in der Steckdosenabdeckung 21 so hindurchgeführt, so dass die Faserendoberfläche wiederum bündig zu einer Oberfläche der Steckdosenabdeckung 21 ist. Durch diese bündige Anordnung lassen sich wieder die optischen Koppelverluste mit einem Faserendstück in einem hier nicht gezeigten Stecker, der in die Steckdosenabdeckung 21 eingeführt ist, reduzieren.

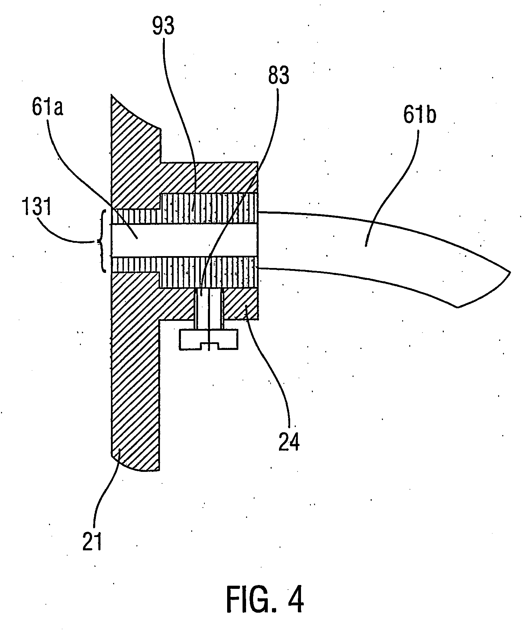

Fig. 4 zeigt ein weiteres Ausführungsbeispiel einer Führungsvorrichtung der vorliegenden Erfindung. Die Führungsvorrichtung ist dabei als Einschubelement 93 ausgeführt, in die eine hier nicht gezeigte Bohrung für eine Festziehschraube 83 eingebracht ist, wodurch der optische Faserabschnitt mit entferntem Schutzmantel 61a an dem Einschubelement 93 festgeklemmt werden kann. Das Einschubelement 93 dient somit gleichzeitig als Führungsvorrichtung und als Klemmvorrichtung. Das Einschubelement 93 ist wie in Fig. 2 in das Faserloch 131 in der Steckdosenabdeckung 21 eingeführt, und gleichzeitig noch in eine Ausnehmung in einem Steckdosen-Erhebungsabschnitt 24, der in einem Teil mit der Steckdosenabdeckung 21 gefertigt ist, eingebracht. Der optische Faserabschnitt mit Schutzmantel 61b ist wiederum so an dem Einschubelement 93 angeordnet, dass der Schutzmantel 46 der optischen Faser 61 an einer dem Schutzmantel zugewandten Außenfläche des Einschubelements 93 bündig anliegt.

Dadurch dass die Klemmvorrichtung 71 in das Einschubelement 93 integriert ist, lässt sich die Zahl der Komponenten gegenüber der Multifunktionssteckdose, die in Fig. 1 gezeigt ist, reduzieren. Dabei sind weniger Montageschritt erforderlich, weil die optische Faser 61 gleichzeitig in die Abstandshülse und die Klemmvorrichtung eingeführt wird.

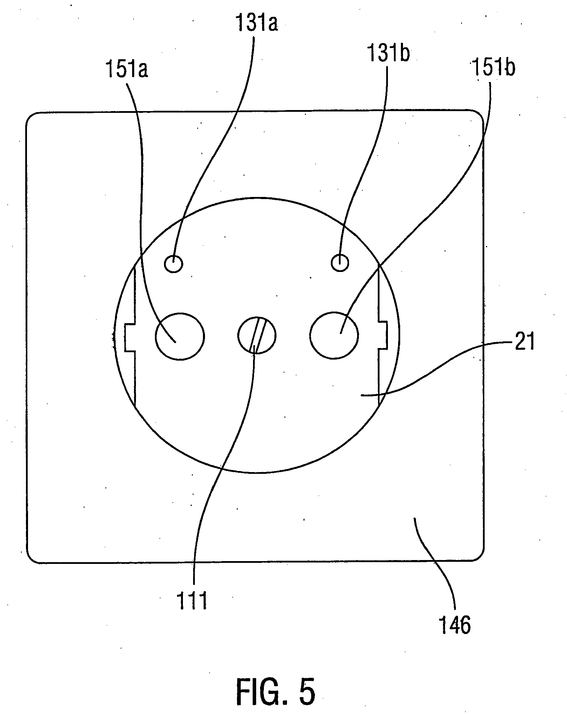

Fig. 5 erläutert eine Vorderansicht eines weiteren Ausführungsbeispiels einer Multifunktionssteckdose gemäß der vorliegenden Erfindung. Aufgeführt sind in Fig. 5 eine Steckdosenwand 146, ein erstes elektrisches Kontaktloch 151a, ein zweites elektrisches Köntaktloch 151b, ein erstes Faserloch 131a und ein zweites Faserloch 131b. Neben den elektrischen Kontaktlöchern 151a, 151b und den Fasenlöchern 131a, 131b ist in der Steckdosenabdeckung 21 noch die Steckdosenabdeckungsschraube 111 zu erkennen.

Um die optischen Fasern 61 möglichst gut von den Kontaktlöchern 151a, 151b räumlich zu trennen, wird das erste Faserloch 131a und das zweite Faserloch 131b auf einer Linie angeordnet, die parallel zu einer Verbindungslinie zwischen dem ersten und dem zweiten elektrischen Kontaktloch 151b verläuft. Die Faserlöcher 131a, 131b sind dabei so in der Steckdosenabdeckung 21 eingebracht, dass, wenn die Steckdosenabdeckung in der Unterputzdose 1 an der Wand 41 befestigt ist, sie direkt oberhalb der elektrischen Kontaktlöcher 151a, 151b liegen. Das heißt, beide Faserlöcher sind auf einer Linie, die senkrecht zu der Linie die zwischen den Kontaktlöchern verläuft, in gleichem Abstand oberhalb bzw. unterhalb der Kontaktlöcher angeordnet.

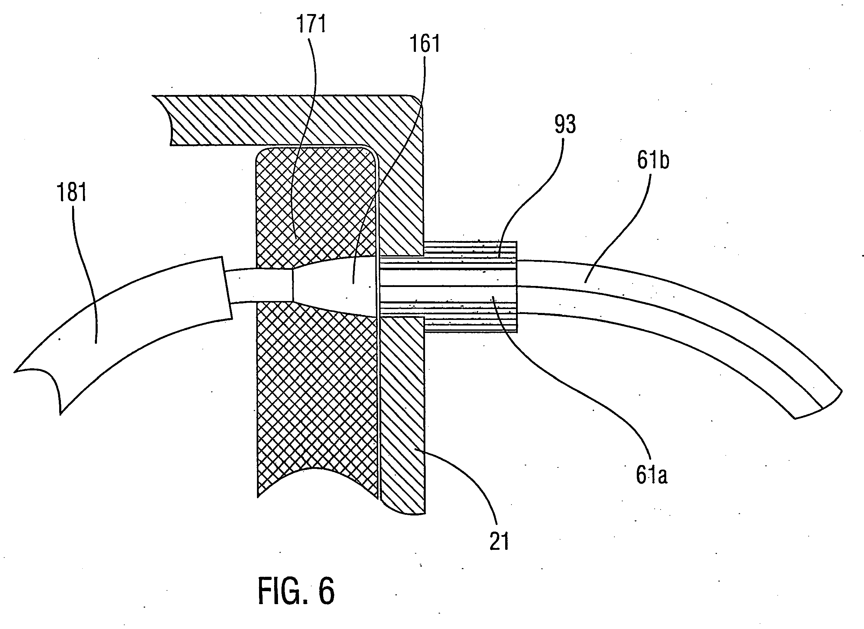

Fig. 6 erläutert, wie die optische Kopplung in der Multifunktionssteckdose gemäß einem Ausführungsbeispiel der vorliegenden Erfindung mit einer Steckerlichtleiterfaser 181 verbessert werden kann. Die optische Faser 61 gliedert sich dabei wieder in einen optischen Faserabschnitt mit entfernten Schutzmantel 61a und einen optischen Faserabschnitt mit Schutzmantel 61b. Der optische Faserabschnitt mit Schutzmantel 61b ist in das Einschubelement 93 eingeführt, so dass die Faserendoberfläche bündig zu der Oberfläche der Steckdosenabdeckung 21 ist. Um die optische Kopplung zwischen der optischen Faser 61 und der Steckerlichtleiterfaser 181 zu verbessern, ist die in einem Steckergehäuse 171 eingebrachte Steckerlichtleiterfaser 181 an dem der Steckdosenabdeckung 21 zugewandten Ende mit dem Fasertaper 161 versehen. Durch den Fasertaper 161 wird das Faserende der Steckerlichtleiterfaser 181 vergrößert, so dass vorhandene Justageprobleme, wenn beispielsweise die Steckerlichtleiterfaser 181 nicht vollständig zentriert zu der optischen Faser 61 in der gezeigten Steckvorrichtung angeordnet ist, kompensiert werden können.

In obigen Ausführungsbeispielen werden optische Fasern 61 aus der Unterputzdose 1 ausgeführt. Die optischen Fasern 61 können dabei als polymeroptische Faser bzw. POF ausgeführt sein, die zusammen mit elektrischen Kabeln 51a, 51b aus der Wand bzw. Mauer 41 herausgeführt werden. Die optischen Fasern 61 werden in der Klemmvorrichtung 71 festgeklemmt, nachdem sie abisoliert wurden, so dass ein kurzes Faserstück 61a bzw. optischer Faserabschnitt mit entferntem Schutzmantel entsteht. Dieses Faserstück 61a wird in die Abstandshülse 91 bzw. Einschubelement 93 geschoben, und mit dieser in dieser in das Faserloch 131 der Steckdosenabdeckung 21 gesteckt. Das Faserende ist dann bündig mit dem Boden der Steckdosenabdeckung 21. Alternativ zur Klemmung mit der Vorrichtung bzw. Klemmvorrichtung 71 kann die optische Faser auch in der Abstandshülse 91 bzw. dem Einschubelement 93 mit der Klemmvorrichtung 71 festgeklemmt werden.

Falls eine Justage der Faser erfolgen soll, kann die Faser nur leicht durch die Klemmvorrichtung 81 geschoben werden, so dass sie noch verschiebbar ist. Dann kann die Faser so weit herausgeschoben werden, dass das Faserende mit dem Steckdosenboden bzw. Boden der Steckdosenabdeckung 21 bündig ist. Anschließend kann dann mit der Klemmvorrichtung 71 die optische Faser 61 festgeklemmt werden.

Im obigen Ausführungsbeispiel ist die Klemmvorrichtung 71 durch einen Körper mit einer zylinderförmigen Ausnehmung und einer Bohrung für eine Klemmschraube ausgeführt. Jedoch sind Alternativen hierzu Klammern oder andere Einrichtungen, die zum Festklemmen von Gegenständen verwendet werden. In obigen Ausführungsbeispielen sind das erste und das zweite elektrische Kontaktloch dazu eingesetzt, ein Gerät mit einer Netzspannung zu versorgen. Jedoch sind auch Ausführungsformen denkbar, bei denen ein Gerät über das erste und zweite elektrische Kontaktloch mit elektrischen Signalen versorgt wird, beispielsweise bei einer Fernsehantennen- oder Rundfunkantennensteckdose.

In obigen Ausführungsbeispielen könnte der Fasertaper 161 alternativ in dem Einschubelement 93 angeordnet werden, so dass der Fasertaper 161 auf der optischen Faser 61 aufgesetzt ist. Auch dies dient dem Prinzip, die optische Kopplung zwischen der Steckerlichtleiterfaser 181 und der optischen Faser 61 zu verbessern.

In obigen Ausführungsbeispielen sind die Faserlöcher 131a, 131b im selben Abstand von der Kontaktlöchern 151a, 151b oberhalb bzw. unterhalb von diesen angeordnet. Alternative Anordnungen sind beliebige Positionen in der Steckdosenabdeckung, die von den Kontaktlöchern 151a, 151b beabstandet sind.

Die vorliegende Erfindung ist oben anhand verschiedener Ausführungsbeispiele von Multifunktionssteckdosen beschrieben. Daneben ist es möglich Faserenden mit Steckern zu verbinden, um Multifunktionsstecker zu realisieren. Ein solcher Stecker ist als Gegenstück zu den beschriebenen Multifünktionssteckdosen konzipiert. Diesbezüglich können sämtliche Merkmale, die bezüglich des Anbringens eines Faserendes an einer Multifunktionssteckdose hierin beschrieben sind, auch bei einem Multifunktionsstecker realisiert sein.

Insbesondere umfasst ein solcher Multifunktionsstecker neben einer entsprechenden Führungsvorrichtung und einer entsprechenden Klemmvorrichtung einen Steckersockel und eine Steckerabdeckung. Ein Kabel von dem Stecker zu einem angeschlossenen Gerät enthält dann neben den Adern für die Stromversorgung eine geeignete flexible Faser, die eine Datenkommunikation ermöglicht. Der weitere Aufbau eines solchen Steckers stellt kein wesentliches Merkmal dar, solange derselbe ein Anbringen eines Faserendes in dem Stecker ermöglicht.

## Patentansprüche

1. Eine Multifunktionssteckdose mit:
einem Steckdosensockel (11);
einer Steckdosenabdeckung (21) mit einer Mehrzahl elektrischer Kontaktlöcher (151a, 151b) und einem von den elektrischen Kontaktlöchern (151a, 151b) beabstandeten Faserloch (131, 131a, 131b);
einer Führungsvorrichtung (23, 91, 93), in die ein Faserende einer optischen Faser (61) einschiebbar ist, um ein Faserende in einer vorbestimmten Beziehung zu dem Faserloch (131) zu positionieren; und
einer Klemmvorrichtung (71, 83) zum Festklemmen der optischen Faser (61) mit dem Faserende in der vorbestimmten Beziehung zu dem Faserloch (131), wobei die Klemmvorrichtung an dem Steckdosensockel (11) angebracht ist, an dem die elektrischen Kontakte befestigt sind, **dadurch gekennzeichnet daß**
die Steckdosenabdeckung eine Kunststoffstokdosenabdickung ist, und wobei die Führungseinrichtung als Teil der Kunststoff-Steckdosenabdeckung (21) ausgeführt ist, um einen Teil der optischen Faser, bei dem der Schutzmantel entfernt ist, aufzunehmen, um eine laterale und longitudinale Führung der optischen Faser sicherzustellen.

2. Multifunktionssteckdose gemäß Anspruch 1, bei der die Führungsvorrichtung (23, 91, 93) ausgebildet ist, um ein Faserende mit einer Faserendoberfläche parallel zu einer Steckdosenabdeckungsoberfläche zu positionieren.

3. Multifunktionssteckdose gemäß einem der Ansprüche 1 oder 2, bei der die Führungsvorrichtung (23, 91, 93) ausgeführt ist, um das Faserende zentriert zu dem Faserloch (131) zu positionieren.

4. Multifunktionssteckdose gemäß Anspruch 3, bei der die Führungsvorrichtung (23, 91, 93) ausgebildet ist, um das Faserende so zu positionieren, dass es sich in das Faserloch (131) hinein erstreckt.

5. Multifunktionssteckdose gemäß Anspruch 4, bei der die Führungsvorrichtung (23, 91, 93) so ausgebildet ist, das Faserende so in dem Faserloch (131) zu positionieren, so dass die Faserendoberfläche bündig zu einer der Faser abgewandten Steckdosenabdeckungsoberfläche ist.

6. Multifunktionssteckdose gemäß Anspruch 1, bei dem die Führungsvorrichtung (23) eine konisch geformte Ausnehmung (141) aufweist, die ausgebildet ist, um den Teil der optischen Faser (61) aufzunehmen, bei dem der Schutzmantel (46) entfernt ist und einen weiteren Teil aufzunehmen, bei dem der Schutzmantel (46) nicht entfernt ist.

7. Multifunktionssteckdose gemäß einem der Ansprüche 1 bis 6, bei dem die Führungsvorrichtung (23, 91, 93) durch eine Erhebung auf der Steckdosenabdeckung gebildet ist.

8. Multifunktionssteckdose gemäß einem der Ansprüche 1 bis 7, bei dem die Führungsvorrichtung (91, 93) eine zylindrische Ausnehmung umfasst, in die das Faserende einschiebbar ist.

9. Multifunktionssteckdose gemäß einem der Ansprüche 1 bis 8, bei dem die Klemmvorrichtung (71) ausgebildet ist, einen Teil der optischen Faser (61) zu halten, bei dem der Schutzmantel (46) nicht entfernt ist.

10. Multifunktionssteckdose gemäß einem der Ansprüche 1 bis 9, bei dem die Klemmvorrichtung (71) eine Schraube (81, 83) umfasst.

11. Multifunktionssteckdose gemäß einem der Ansprüche 1 bis 10, bei der die Steckdosenabdeckung (21) ein weiteres Faserloch (131) aufweist, das von dem Faserloch (131) und den elektrischen Kontaktlöchern (151a, 151b) beabstandet ist.

12. Multifunktionssteckdose gemäß Anspruch 11, bei der das weitere Faserloch (131b) und das Faserloch (131a) in einer Faserlochlinie angeordnet sind, die in vorbestimmten Toleranzen parallel zu einer Kontaktlochlinie, in der die elektrischen Kontaktlöcher (151a, 151b) angeordnet sind, ist.

13. Multifunktionssteckdose gemäß Anspruch 12, bei der das Faserloch (131a) und das weitere Faserloch (131b) in vorbestimmter Toleranz auf der Steckdosenabdeckung so angeordnet sind, dass sie, wenn die Steckdosenabdeckung (21) in eine Wand (41) geschraubt ist, senkrecht zur Kontaktlochlinie oberhalb oder unterhalb der Kontaktlöcher (151a, 151b) angeordnet sind.

14. Multifunktionssteckdose gemäß einem der Ansprüche 1 bis 13, mit einem Fasentaper (161), der an dem Faserloch (131) und an dem Faserende positionierbar ist, um eine optische Kopplung mit einer optischen Steckerlichtleiterfaser (181) oder einem optischen Sender bzw. Empfänger in einem Stecker, der in die Multifunktionssteckdose hineingesteckt ist, zu verbessern.

15. Multifunktionssteckdose gemäß einem der Ansprüche 1 bis 10, bei der Führungsvorrichtung ausgestaltet ist, um einen aufgeweiteten Teil einer optischen Faser in Position zu bringen, und die Klemmvorrichtung ausgestaltet ist, um entweder den nicht aufgeweiteten Teil der Faser oder den aufgeweiteten Teil der Faser festzuklemmen.

## Claims

1. A multifunctional socket comprising:
a socket base (11); and
a socket cover (21) having a plurality of electrical contact holes (151a, 151b) and a fiber hole (131, 131a, 131b) spaced from the electrical contact holes (151a, 151 b),
a guiding device (23, 91, 93) into which a fiber end of an optical fiber (61) may be inserted to position the fiber end in a predetermined relationship to the fiber hole (131; and
a clamping device (71, 83) for reversibly clamping the optical fiber (61) with the fiber end in the predetermined relationship to the fiber hole (131), the clamping device being mounted on the socket base (11) which has the contacts attached to it,
**characterized in that**
the socket cover is a plastic socket cover, and
the guiding means being configured as part of the plastic socket cover (21) so as to receive a part of the optical fiber where the protective jacket is removed in order to ensure lateral and longitudinal guidance of the optical fiber.

2. Multifunctional socket of claim 1, wherein the guiding device (23, 91, 93) is design to position a fiber end, wherein a fiber end surface and a socket cover surface are arranged in parallel.

3. Multifunctional socket of claim 1 or 2, wherein the guiding device (23, 91, 93) is designed to center the fiber end with respect to the fiber hole (131).

4. Multifunctional socket of claim 3, wherein the guiding device (23, 91, 93) is designed to position the fiber end so that it extends into the fiber hole (131).

5. Multifunctional socket of claim 4, wherein the guiding device (23, 91, 93) is designed to position the fiber end in the fiber hole (131) so that the fiber end surface is flush with a socket cover surface facing away from the fiber.

6. Multifunctional socket of claim 1, wherein the guiding device (23) comprises a conically formed recess (141) designed to receive the part of the optical fiber (61) where the protective jacket (46) is removed, and to receive a further part where a protective jacket (46) is not removed.

7. Multifunctional socket of one of claims 1 to 6, wherein the guiding device (23, 91, 93) is formed by an elevation on the socket cover.

8. Multifunctional socket of one of claims 1 to 7, wherein the guiding device (91, 93) includes a cylindrical recess into which the fiber end may be inserted.

9. Multifunctional socket of one of claims 1 to 8, wherein the clamping device (71) is designed to hold a part of the optical fiber (61) where the protective jacket (46) is not removed.

10. Multifunctional socket of one of claims 1 to 9, wherein the clamping device (71) includes a screw (81, 83).

11. Multifunctional socket of one of claims 1 to 10, wherein the socket cover (21) comprises a further fiber hole (131) spaced from the fiber hole (131) and the electrical contact holes (151a, 151b).

12. Multifunctional socket of claim 11, wherein the further fiber hole (131b) and the fiber hole (131a) are arranged in a fiber hole line parallel to a contact hole line, in which the electrical contact holes (151a, 151 b) are arranged, within predetermined tolerances.

13. Multifunctional socket of claim 12, wherein the fiber hole (131a) and the further fiber hole (131b) are arranged on the socket cover within a predetermined tolerance so that they are arranged perpendicular to the contact hole line above or below the contact holes (151a, 151b) when the socket cover (21) is screwed into a wall (41).

14. Multifunctional socket of one of claims 1 to 13, comprising a fiber taper (161) that may be positioned at the fiber hole (131) and at the fiber end to improve optical coupling to an optical plug light guide fiber (181) or an optical transmitter and/or receiver in a plug inserted in the multifunctional socket.

15. Multifunctional socket of one of claims 1 to 10, wherein the guiding device is designed to bring an expanded part of an optical fiber into position, and the clamping device is designed to clamp either the non-expanded part of the fiber or the expanded part of the fiber.

## Revendications

1. Prise multifonction, avec:
un socle de prise (11);
un cache-prise (21) avec une pluralité de trous de contact électriques (151a, 151b) et un trou à fibre (131, 131a, 131b) distant des trous de contact électriques (151a, 151b);
un dispositif de guidage (23, 91, 93) dans lequel peut être introduite une extrémité d'une fibre optique (61), pour positionner une extrémité de fibre selon un rapport prédéterminé avec le trou à fibre (131); et
un dispositif de serrage (71, 83) destiné à serrer la fibre optique (61) avec l'extrémité de fibre selon le rapport prédéterminé avec le trou à fibre (131), le dispositif de serrage étant placé sur le socle de prise (11) auquel sont fixés les contacts électriques,
**caractérisée par le fait que** le cache-prise est un cache-prise en matière plastique, et
dans laquelle le dispositif de guidage est réalisé sous forme de partie du cache-prise en matière plastique (21), pour recevoir une partie de la fibre optique dans laquelle la gaine de protection est enlevée, pour assurer un guidage latéral et longitudinal de la fibre optique.

2. Prise multifonction selon la revendication 1, dans laquelle le dispositif de guidage (23, 91, 93) est réalisé pour positionner une extrémité de fibre avec une surface d'extrémité de fibre parallèle à une surface de cache-prise.

3. Prise multifonction selon l'une des revendications 1 ou 2, dans laquelle le dispositif de guidage (23, 91, 93) est réalisé pour positionner l'extrémité de fibre centrée par rapport au trou à fibre (131).

4. Prise multifonction selon la revendication 3, dans laquelle le dispositif de guidage (23, 91, 93) est réalisé pour positionner l'extrémité de fibre de sorte qu'elle s'étende jusque dans le trou à fibre (131).

5. Prise multifonction selon la revendication 4, dans laquelle le dispositif de guidage (23, 91, 93) est réalisé pour positionner l'extrémité de fibre de sorte que la surface d'extrémité de fibre soit en liaison étroite avec une surface de cache-prise éloignée de la fibre.

6. Prise multifonction selon la revendication 1, dans laquelle le dispositif de guidage (23) présente un évidement (141) de forme conique qui est réalisé pour recevoir la partie de la fibre optique (61) dans laquelle la gaine de protection (46) est enlevée et pour recevoir une autre partie dans laquelle la gaine de protection (46) n'est pas enlevée.

7. Prise multifonction selon l'une des revendications 1 à 6, dans laquelle le dispositif de guidage (23, 91, 93) est formé par une élévation sur le cache-prise.

8. Prise multifonction selon l'une des revendications 1 à 7, dans laquelle le dispositif de guidage (91, 93) comporte un évidement cylindrique dans lequel peut être introduite l'extrémité de fibre.

9. Prise multifonction selon l'une des revendications 1 à 8, dans laquelle le dispositif de serrage (71) est réalisé pour maintenir une partie de la fibre optique (61) dans laquelle la gaine de protection (46) n'est pas enlevée.

10. Prise multifonction selon l'une des revendications 1 à 9, dans laquelle le dispositif de serrage (71) comporte une vis (81, 83).

11. Prise multifonction selon l'une des revendications 1 à 10, dans laquelle le cache-prise (21) présente un autre trou à fibre (131) qui est distant du trou à fibre (131) et des trous de contact électriques (151a, 151b).

12. Prise multifonction selon la revendication 11, dans laquelle l'autre trou à fibre (131b) et le trou à fibre (131a) sont disposés sur une ligne de trou à fibre qui est, dans les limites de tolérances prédéterminées, parallèle à une ligne de trou de contact sur laquelle sont disposés les trous de contact électriques (151a,151b).

13. Prise multifonction selon la revendication 12, dans laquelle le trou à fibre (131a) et l'autre trou à fibre (131b) sont, avec une tolérance prédéterminée, disposés sur le cache-prise de sorte qu'ils soient disposés, lorsque le cache-prise (21) est vissé dans un mur (41), perpendiculairement à la ligne de trou de contact au-dessus ou au-dessous des trous de contact (151a, 151b).

14. Prise multifonction selon l'une des revendications 1 à 13, avec un effilement de fibre (161) qui peut être positionné au trou de fibre (131) et à l'extrémité de fibre, pour améliorer un couplage optique avec une fibre optique de fiche (181) ou un émetteur ou récepteur optique dans une fiche qui est enfichée dans une prise multifonction.

15. Prise multifonction selon l'une des revendications 1 à 10, dans laquelle le dispositif de guidage est réalisé pour amener en position une partie élargie d'une fibre optique, et le dispositif de serrage est réalisé pour serrer soit la partie non élargie de la fibre, soit la partie élargie de la fibre.
